# EUROPÄISCHE PATENTSCHRIFT

(11) **EP 1 265 945 B1**
(45) Veröffentlichungstag und Bekanntmachung des Hinweises auf die Patenterteilung: **01.12.2004**
(21) Anmeldenummer: 01919296.2
(22) Anmeldetag: 16.02.2001
(51) Int. Cl.: C08G 65/26, B01J 27/26, B01J 19/18

(54) **VERFAHREN ZUR HERSTELLUNG VON POLYETHERPOLYOLEN IN GEGENWART EINES MULTIMETALLCYANIDKOMPLEX-KATALYSATORS**
METHOD FOR PRODUCING POLYETHERPOLYOLS IN THE PRESENCE OF A MULTIMETAL CYANIDE COMPLEX CATALYST
PROCEDE DE PREPARATION DE POLYETHERPOLYOLS EN PRESENCE D'UN CATALYSEUR SOUS FORME DE COMPLEXE MULTIMETAL-CYANURE

(30) Priorität: 24.02.2000 DE 10008629
(43) Veröffentlichungstag der Anmeldung: 18.12.2002
(73) Patentinhaber: BASF AKTIENGESELLSCHAFT, 67056 Ludwigshafen (DE)
(72) Erfinder: OSTROWSKI, Thomas, 44581 Castrop-Rauxel (DE); HARRE, Kathrin, 01109 Dresden (DE); GROSCH, Georg, Heinrich, 67098 Bad Dürkheim (DE); WINKLER, Jürgen, 01987 Schwarzheide (DE)
(74) Vertreter: Isenbruck, Günter, Dr.
(86) Internationale Anmeldenummer: PCT/EP2001/001782
(87) Internationale Veröffentlichungsnummer: WO 2001/062824

(56) Entgegenhaltungen:
- EP-A- 0 633 060
- DE-A- 19 742 978
- US-A- 3 894 093
- US-A- 4 472 560

## Beschreibung

Die Erfindung betrifft ein Verfahren zur Herstellung von Polyetherpolyolen.

Polyetherpolyole werden in großem Umfang, insbesondere für die Herstellung von Polyurethanschäumen bereitgestellt. Die bekannten Herstellungsverfahren von Polyetherpolyolen erfolgen in der Regel aus Alkylenoxiden in Gegenwart eines kurzkettigen Starters unter Einsatz unterschiedlicher Katalysatoren. wie Basen. hydrophobierte Doppelschichthydroxide, saure oder lewissaure Systeme, metallorganische Verbindungen oder Multimetallcyanidkomplex-Verbindungen.

Heterogene Multimetallcyanidkomplex-Katalysatoren sind hochselektive und aktive Katalysatoren, die sich insbesondere zur Herstellung von Weichschaumpolyetherpolyolen, bei denen ein hohes Molekulargewicht erreicht werden muß und bei denen lange Oxalkylierungszeiten erforderlich sind. eignen. Durch den Einsatz von Multimetallycyanidkomplex-Katalysatoren können die Herstellungskosten gesenkt werden und gleichzeitig hochwertiges Polyetherpolyol, das zu geruchsarmen und damit hochwertigen Polyurethanschäumen weiterverarbeitet werden kann, erhalten werden. Aus der Literatur ist bekannt, daß Nebenreaktionen, die zur Bildung von Geruchsstoffen und ungesättigten Bestandteilen führen können, kaum auftreten.

Die hohe Aktivität hat allerdings zur Folge. daß die Reaktionswärme in herkömmlichen Reaktoren nicht mehr abgeführt werden kann. Wird die multimetallcyanidkomplexkatalysierte Polyetherpolyolherstellung in Standard-Rührkesseln durchgeführt, so sind die Dosierraten an Alkylenoxid durch die Wärmeabfuhrleistung der Wärmetauscher begrenzt.

Die US 5.811,595 schlägt einen ideal durchmischten Reaktor mit einem oder zwei Wärmetauschern vor, wobei das Polyetherpolyol in den Kreislaufstrom des Wärmetauschers, und das Ethylenoxid in den Reaktor eingespeist wird. Mittels einer Düse wird die Vermischung des Ethylenoxids mit der flüssigen Phase erreicht.

Nachteilig bei diesem Verfahren ist die hohe Umpumpmenge. die zur Aufrechterhaltung der hohen Wärmeabfuhrleistung erforderlich ist sowie die Gefahr der mechanischen Schädigung des heterogenen Katalysators durch die Pumpe. Zudem wird das hochreaktive Ethlyenoxid in den Reaktor eingefüllt, in dem die Wärmeabfuhr wegen der verwendeten Kühlschlangen, insbesondere bei niedrigen Füllgraden aufgrund der kleinen Austauschfläche sehr schlecht ist. Überhitzungen aufgrund der hohen Reaktionsgeschwindigkeit mit der Folge von Produktschädigungen können auftreten. Dies kann sich durch die schlechte Durchmischung im Reaktor verstärken.

Die EP-A-0 850 954 beschreibt ein Verfahren. bei dem die Reaktion im Gasraum oberhalb der Reaktionsflüssigkeit stattfindet. Das Polyetherpolyol wird im Kreis über einen Wärmetauscher gepumpt und durch Düsen zugeführt. Dies hat eine hohe Flüssigkeitsoberfläche zur Folge. Parallel dazu werden Ethylenoxid und Polyetherpolyol über Düsen zudosiert. Die große Oberfläche bewirkt einen guten Stoffaustausch und somit hohe Reaktionsgeschwindigkeiten.

Aufgrund der hohen Reaktionsgeschwindigkeit, die mit diesem Verfahren erreicht werden kann. sind lokale Übertemperaturen in den einzelnen Tröpfchen zu erwarten. die wiederum Produktschädigungen zur Folge haben. Weiterhin ist auch hier die hohe zur Wärmeabfuhr erforderliche Umpumpmenge nicht unbedenklich für den heterogen dispergierten Multimetallcyanidkomplex-Katalysator; die Gefahr von Schädigungen kann nicht ausgeschlossen werden.

Die künstlich vergrößerte Gasphase stellt weiterhin, insbesondere bei der Ethoxylierung. ein Gefahrenpotential dar. da freies Alkylenoxid in der Gasphase vorliegt. Ethylenoxid neigt zum Gasphasenzerfall, der zum Bersten des Reaktors führen kann. Im Fall der Einleitung des Polyetherpolyols oder Ethylenoxids in die Flüssigkeit ist dagegen aufgrund des aktiven Multimetallcyanidkomplexes ein schnelles Abreagieren des Alkylenoxids zu erwarten.

Aus EP-B-0 633 060 ist ein Reaktor für Gas-Flüssig-Reaktionen mit einer zentralen Rührvorrichtung bekannt, um die herum von einem Wärmetauschmittel durchströmte Wärmetauscherplatten in einem Winkel von 0 bis 70° in Drehrichtung des Rührers zum Reaktorradius angeordnet sind. Durch die direkte Wärmeabführung am Ort ihrer Entstehung können eine erhöhte Produktivität. eine hohe Produktqualität sowie ein reduzierter Katalysatorverbrauch sichergestellt werden. Der Reaktor der EP-B-0 633 060 wurde insbesondere für stark exotherme katalytische Hydrierungsreaktionen vorgeschlagen.

Es war Aufgabe der Erfindung, ein apparativ einfaches Verfahren zur Herstellung von Polyetherpolyolen in Gegenwart von Multimetallcyanidkomplex-Katalysatoren unter Verbesserung der Raumzeitausbeute sowie Vermeidung von örtlichen Überhitzungen und dadurch verstärkt ablaufenden Nebenreaktionen. somit unter Gewährleistung einer hohen Produktqualität, bereitzustellen.

Die Lösung geht aus von einem Verfahren zur Herstellung von Polyetherpolyolen durch Umsetzung von Diolen oder Polyolen mit Ethylenoxid, Propylenoxid, Butylenoxid oder Gemischen hiervon in Gegenwart eines Multimetallcyanidkomplex-Katalysators.

Die Erfindung ist dadurch gekennzeichnet, daß die Umsetzung in einem vertikalen. hochzylindrischen Reaktor mit zentralem Rührer sowie mit von einem Wärmetauschmittel durchströmten Wärmetauscherplatten, die im wesentlichen in Reaktorlängsrichtung, in einem Winkel α von 0 bis 70° in Drehrichtung des Rührers zum Reaktorradius angeordnet sind, durchgeführt wird.

Der in EP-B-0 633 060 beschriebene vertikale, hochzylindrische Reaktor mit zentralem Rührer sowie mit von einem Wärmetauschmittel durchströmten Wärmetauscherplatten, die im wesentlichen in Reaktorlängsrichtung, in einem Winkel α von 0 bis 70° in Drehrichtung des Rührers zum Reaktorradius angeordnet sind, wurde insbesondere für stark exotherme katalytische Hydrierungsreaktionen entwickelt. Dabei handelt es sich um niedrigviskose flüssige Reaktionsgemische, d.h. um Flüssigkeiten, die unter Reaktionsbedingungen eine Viskosität deutlich unter 10 mPas besitzen.

Die Erfinder des vorliegenden Verfahrens haben demgegenüber überraschend gefunden. daß der aus EP-B-0 633 060 bekannte Reaktortyp auch für höher viskose Reaktionsmedien, wie es die Polyetherpolyole der vorliegenden Erfindung sind, eingesetzt werden kann. Polyetherpolyole besitzen in der Regel hohe Viskositäten, bei Raumtemperatur etwa im Bereich von 80 bis 1000 mPas, unter Reaktionsbedingungen (ca. 100 bis 130°C) immer noch oberhalb 20 mPas. häufig oberhalb 100 mPas. Es ist bekannt. daß die Grenzschicht zwischen Wärmetauscher und Reaktionsmischung mit steigender Viskosität zunimmt. mit der Folge, daß die Wärme immer schlechter abgeführt werden kann. Nach dem erfindungsgemäßen Verfahren konnte trotz der erhöhten Viskosität überraschend eine ausreichende Wärmeabfuhr erreicht werden, so daß hohe Alkylenoxiddosiergeschwindigkeiten mit der Folge einer verbesserten Raumzeitausbeute und somit einer erhöhten Produktivität sowie mit einer guten Produktqualität realisiert werden konnten. Lokale Übertemperaturen, die zu Produktschädigung führen könnten. wurden vermieden.

Erfindungsgemäß werden Diole oder Polyole zusammen mit einem Multimetallcyanidkomplex-Katalysators in einem vertikalen, hochzylindrischen Reaktor mit zentralem Rührer sowie mit von einem Wärmetauschermittel durchströmten Wärmetauscherplatten, die im wesentlichen in Reaktorlängsrichtung, in einem Winkel α von 0 bis 70° in Drehrichtung des Rührers zum Reaktorradius angeordnet sind. vorgelegt und anschließend mit Ethylenoxid, Propylenoxid, Butylenoxid oder Gemischen hiervon umgesetzt. Nachdem das Alkylenoxid vollständig abreagiert ist. wird das Reaktionsprodukt aus dem Reaktor abgezogen.

Die Erfindung enthält keine Einschränkungen bezüglich des einsetzbaren Multimetallcyanidkomplex-Katalysators: es kann sich um amorphe, bevorzugt aber um zumindest teilweise. überwiegend oder vollständig kristalline Formen handeln. Gegebenenfalls ist der Katalysator geträgert. Besonders bevorzugt werden Multimetallcyanidkomplex-Katalysatoren der allgemeinen Formel (1)

M¹ ₐ[M²(CN)_{b}L¹ _{c}]_{d} e(M¹ _{f}X_{g}) hL².iH₂O (I)

eingesetzt. in der
M¹ mindestens ein Element aus der Gruppe, bestehend aus Zn(II), Fe(II), Co(III), Ni(II), Mn(II), Co(II), Sn(II), Pb(II), Fe(III), Mo(IV), Mo(VI), Al(III), V(IV), V(V), Sr(II), W(IV), W(VI), Cu(II), Cd(II), Hg(II), Pd(II), Pt(II), V(III), Mg(II), Ca(II), Sr(II), Ba(II) und Cr(III) ist,
M² mindestens ein Element aus der Gruppe. bestehend aus Fe(II), Fe(III), Co(III), Cr(III), Mn(II), Mn(III), Ir(III), Rh(III), Ru(II), V(IV), V(V), Co(II) und Cr(II) ist,
L¹ mindestens ein Ligand aus der Gruppe, bestehend aus Cyanid, Carbonyl, Cyanat. Isocyanat, Nitril, Thiocyanat und Nitrosyl ist,
X ein Formiatanion, Acetatanion oder Propionatanion ist
L² mindestens ein mit Wasser mischbarer Ligand aus der Gruppe, bestehend aus Alkoholen, Aldehyden, Ketonen. Ethern, Polyethern. Estern, Harnstoffderivaten. Amiden. Nitrilen und Sulfiden ist,
a, b, d, e, f, g, ganze oder gebrochene Zahlen größer als Null sind,
c. h. i ganze oder gebrochene Zahlen gleich oder größer als Null sind, wobei
a. b. c und d so gewählt sind, daß die Elektroneutralitätsbedingung erfüllt ist und
f und g so gewählt sind. daß die Elektroneutralitätsbedingung erfüllt ist, dessen Röntgendiffraktogramm Reflexe bei mindestens den d-Werten
6,10 Å ± 0,04 Å
5,17 Å ± 0,04 Å
4,27 Å ± 0,02 Å
3,78 Å ± 0,02 Å
3,56 Å ± 0,02 Å
3.004 Å ± 0,007 Å
2,590 Å ± 0,006 Å
2,354 Å ± 0,004 Å
2.263 Å ± 0,004 Å
aufweist, wenn X ein Formiatanion ist, dessen Röntgendiffraktorgramm Reflexe bei mindestens den d-Werten
5.20 Å ± 0,02 Å
4.80 Å ± 0,02 Å
3,75 Å ± 0,02 Å
3.60 Å ± 0,02 Å
3,46 Å ± 0.01 Å
2.824 Å ± 0.008 Å
2.769 Å ± 0,008 Å
2.608 Å ± 0.007 Å
2.398 Å ± 0,006 Å
aufweist, wenn X ein Acetatanion ist. und dessen Röntgendiffraktorgramm Reflexe bei mindestens den d-Werten
5,59 Å ± 0,05 Å
5,40 Å ± 0,04 Å
4,08 Å ± 0,02 Å
3,94 Å ± 0,02 Å
3,76 Å ± 0,02 Å
3,355 Å ± 0,008 Å
3,009 Å ± 0.007 Å
2,704 Å ± 0,006 Å
2,381 Å ± 0,004 Å
aufweist. wenn X ein Propionatanion ist oder die ein monokines Kristallsystem aufweisen, wenn X ein Acetatanion ist.

Derartige Multimetallcyanidkomplex-Katalysatoren sind in DE-A-197 42 978 beschrieben.

Das Verfahren wird erfindungsgemäß in einem vertikalen, hochzylindrischen Reaktor mit zentralem Rührer sowie mit von einem Wärmetauschmittel durchströmten Wärmetauscherplatten. die im wesentlichen in Reaktorlängsrichtung, in einem Winkel α von 0 bis 70° in Drehrichtung des Rührers zum Reaktorradius angeordnet sind. durchgeführt. Ein derartiger Reaktor ist in EP-B-0 633 060 bevorzugt für stark exotherme Hydrierungsreaktionen beschrieben.

Der Multimetallcyanidkomplex-Katalysator wird bevorzugt in Anteilen, bezogen auf die Masse an zu erzeugendem Produkt. von weniger als 250 ppm, besonders bevorzugt von weniger als 100 ppm. insbesondere von weniger als 50 ppm, eingesetzt. In mit Wärmetauscherplatten ausgestatteten Reaktoren besteht die Gefahr, daß sich heterogene Katalysator in Ecken. Winkeln oder sonstigen ungenügend angeströmten Stellen absetzt und in Folge dessen für die katalytische Reaktion nicht mehr oder nur in ungenügenden Maße zur Verfügung steht. Dieses Problem ist bei relativ hohen Katalysatorkonzentrationen nicht ganz so kritisch, weil sich ein Katalysatorverlust in diesem Fall nicht extrem auf die Qualität der Katalyse und der Produkte auswirkt. Dagegen bedeutet bei niedrigen Katalysatorkonzentrationen. beispielsweise 100 ppm oder weniger der Verlust an verfügbarem Katalysator schon in einer Größenordnung von einigen 10 ppm einen dramatischen absoluten Verlust an Katalysatormasse und damit an Katalysatoraktivität. Die Folge ist eine deutlich schlechtere Produktqualität, breitere Molekulargewichtsverteilungen sowie hochmolekulare Anteile. Demgegenüber wurde überraschend gefunden, daß bei dem erfindungsgemäßen Verfahren trotz sehr niedriger Katalysalorkonzentrationen und der hohen Viskosität des Polyols derartige Probleme nicht auftraten, und keine Verschlechterung der Produktqualität stattfand.

In einer bevorzugten Ausführungsvariante sind die Wärmetauscherplatten in Drehrichtung des Rührers abgeknickt oder gebogen. Dadurch ist der mechanische Widerstand reduziert.

Als Wärmetauschmittel wird bevorzugt Wasser eingesetzt.

Nach einer bevorzugten Ausführungsvariante wird das Wärmetauschmittel aus dem Wärmetauscherplatten in einer Schlaufenströmung über einen außerhalb des Reaktors angeordneten Wärmetauscher geführt. Dadurch kann die Wärmeabfuhr zusätzlich verbessert werden.

Um insbesondere zu Beginn der Reaktion die Wärmeabfuhr bei geringer Startermenge zu gewährleisten und ein Aufheizen des Starters zu ermöglichen, kann zudem ein weiterer Wärmetauscher auf dem Reaktoraußenmantel angeordnet sein.

Der auf dem Reaktoraußenmantel angeordnete Wärmetauscher ist bevorzugt in Form von Wärmetauscherhalbrohren ausgebildet.

Die Umsetzung wird bevorzugt bei einer Temperatur im Bereich von 90 bis 200°C und einem Druck im Bereich von 1 bis 50 bar durchgeführt.

Besonders bevorzugt ist ein Temperaturbereich von 110 bis 140°C und ein Druck von 2 bis 10 bar.

Die Umsetzung wird bevorzugt nach der Semi-batch-Fahrweise durchgerührt, d.h. Starter und Katalysator werden vorgelegt und das Alkylenoxid. das heißt Ethylenoxid, Propylenoxid, Butylenoxid oder Gemische davon werden in den Reaktor bis zum Erreichen der gewünschten Molmasse zudosiert. Hierdurch wird erreicht, daß einerseits keine Akkumulation von Alkylenoxid eintritt und damit die Gefahr der Durchgehreaktion vermieden wird und andererseits eine sichere Temperaturkontrolle erreicht wird. Somit kann eine exakte Kontrolle der Verweilzeit, die für eine konstante Molekulargewichtsverteilung erforderlich ist. erreicht werden.

Durch den Eintrag von Rührenergic über den zentralen Rührer wird eine intensive Durchmischung aller Komponenten des Reaktionsgemisches erreicht. Die Anordnung der Wärmetauscherplatten im Reaktor in einem Winkel α von 0 bis 70°C in Drehrichtung des Rührers zum Reaktorradius führt zu einer nahezu vollständigen Gradientenfreiheit der Reaktionstemperatur über den Reaktor. Dadurch werden örtliche Überhitzungen vermieden mit der Folge einer deutlichen Zurückdrängung von Nebenreaktionen sowie einer weitgehenden Vermeidung einer Katalysatordesaktivierung. Entsprechend werden hohe Raumzeitausbeuten erreicht, die auf die gute Wärmeabfuhr und die dadurch mögliche hohe Alkylenoxiddosiergeschwindigkeit zurückgeführt werden.

Die Erfindung wird im folgenden anhand eines Ausführungsbeispiels näher erläutert:

Es wurden folgende Bestimmungsmethoden eingesetzt:

Die Bestimmung des Gehalts an ungesättigten Bestandteilen erfolgte über die lodzahl. Hierfür wurden in einem ersten Verfahrensschritt die ungesättigten Anteile bromiert, überschüssiges Brom wurde mit Kaliumjodid-Lösung unter Ausfällung von Iod umgesetzt.

Der Gehalt an ungesättigten Bestandteilen in Milliäquivalenten/g (meq/g) ergab sich durch Titration des ausgefällten Iods mit Thiosulfatlösung. Der Cycloacetalgehalt wurde durch Headspace-GC-MS-Analyse bestimmt, wobei die Massenspur von m/e=130 verfolgt wurde. Die Probentemperatur betrug 130°C.

### Vergleichsbeispiel

In einem Rührkessel mit innenliegenden Kühlschlangen wurde ein Starter (Glycerin-Propoxylat) mit einer mittleren Molmasse von 400 g/mol vorgelegt. Es wurden 100 ppm DMC bezogen auf die Polyol-Endmasse zugesetzt.

Die Herstellung des Multimetallcyanidkatalysators erfolgte in einem zweistufigen Prozeß. wonach zunächst die Säure und anschließend der Katalysator durch Fällung erhalten wurde. Hierzu wurden 7 1 stark saurer Ionenaustauscher, der sich in der Natriumform befand, und zwar Amberlite® 252 Na der Firma Rohm & Haas in eine Austauschersäule mit der Länge von 1 m und dem Volumen von 7,7 I gefüllt. Der Ionenaustauscher wurde anschließend in die Säureform überführt, indem 10 %ige Salzsäure mit einer Geschwindigkeit von 2 Bettvolumen pro Stunde 9 Stunden lang über die Austauschersäule gefahren wurde. bis der Natrium-Gehalt im Austrag < 1 ppm war. Anschließend wurde der Ionenaustauscher mit Wasser gewaschen. Der regenerierte Ionenaustauscher wurde daraufhin benutzt, um eine im wesentlichen alkalifreie Hexacyanocobaltatsäure herzustellen. Hierzu wurde eine 0,24 molare Lösung von Kaliumhexacyanocobaltat in Wasser mit einer Geschwindigkeit von einem Bettvolumen pro Stunde über den Ionenaustauscher gefahren. Nach 2,5 Bettvolumen wurde von der Kaliumhexacyanocobaltat-Lösung auf Wasser gewechselt. Die erhaltenen 2.5 Bettvolumen hatten im Mittel einen Gehalt von 4,5 Gew.-% Hexacyanocobaltatsäure und Alkaligehalte < 1ppm.

Zur Herstellung des Katalysators wurden anschließend 8553,5 g Zinkacetat-Lösung (Gehalt an Zinkacetat-Dihydrat: 8,2 Gew.-%, Gehalt an Pluronic® PE 6200, d.h. einem Blockcopolymer aus Ethylenoxid und Propylenoxid. das zur Steuerung der Kristallmorphologie eingesetzt wird, 1,3 Gew.-%) in einem 20 1-Reaktor vorgelegt und unter Rühren auf 60°C hochgeheizt. Anschließend wurden 9956 g Hexacyanocobaltatsäure-Lösung (Cobaltgehalt 9 g/l. Gehalt an Pluronic® PE 6200 1.3 Gew.-%) innerhalb von 20 min bei 60°C unter stetigem Rühren zugeführt. Die erhaltene Suspension wurde noch weitere 60 min bei 60°C nachgerührt. Anschließend wurde der so erhaltene Feststoff abfiltriert und mit dem 6-fachen des Kuchenvolumens gewaschen. Der feuchte Filterkuchen wurde anschließend in Polypropylenglykol der Molmasse 400 g/mol dispergiert.

### Die so erhaltene Dispersion wurde als Katalysator eingesetzt

Es wurde 1 h im Vakuum entwässert und anschließend so lange propoxyliert, bis eine Molmasse von 3000 g/mol erreicht wurde. Aus der Zulaufgeschwindigkeit des Propylenoxids, die nur durch die Wärmeabfuhrleistung begrenzt wurde, ergab sich eine Raum-Zeit-Ausbeute von 210 kg/m³/h. Es wurde ein Gehalt an ungesättigten Bestandteilen von 0.0052 meq/g festgestellt. Der Gehalt an Cycloacetalen betrug 0,06 ppm.

### Beispiel

Die Reaktion wurde unter denselben Versuchsbedingungen wie im Vergleichsbeispiel jedoch in einem zylindrischen Reaktor mit zentralem Rührer mit von Wasser durchströmten Wärmetauscherplatten, die in Reaktorlängsrichtung und radial im Reaktor angeordnet waren, durchgeführt. Der Reaktor hatte eine Füllmasse von 40 t und die Wärmetauscherfläche betrug 600 m². Durch die bessere Wärmeabführung konnte die Zulaufgeschwindigkeit des Propylenoxids um den Faktor 1,8 und in der Folge die Raum-Zeit-Ausbeute auf 380 kg/m³/h gesteigert werden. Die Gehalte an ungesättigten Bestandteilen und Cycloacetalen wurden zu 0.0050 meq/g bzw. 0,04 ppm bestimmt.

Somit konnte durch die Verwendung des erfindungsgemäßen Reaktors eine Steigerung der Raum-Zeit-Ausbeute um 80 % bei leicht verbesserter Produktqualität erreicht werden.

## Patentansprüche

1. Verfahren zur Herstellung von Polyetherpolyolen durch Umsetzung von Diolen oder Polyolen mit Ethylenoxid. Propylenoxid. Butylenoxid oder Gemischen hiervon in Gegenwart eines Multimetallcyanidkomplex-Katalysators, **dadurch gekennzeichnet, daß** die Umsetzung in einem vertikalen, hochzylindrischen Reaktor mit zentralem Rührer sowie mit von einem Wärmetauschmittel durchströmten Wärmetauscherplatten, die im wesentlichen in Reaktorlängsrichtung, in einem Winkel α von 0 bis 70° in Drehrichtung des Rührers zum Reaktorradius angeordnet sind. durchgeführt wird.

2. Verfahren nach Anspruch 1, **dadurch gekennzeichnet, daß** die Wärmetauscherplatten radial angeordnet sind.

3. Verfahren nach Anspruch 1 oder 2, **dadurch gekennzeichnet, daß** der Multimetallcyanidkomplex-Katalysator in einer Konzentration, bezogen auf die Masse an zu erzeugendem Produkt. von weniger als 250 ppm, bevorzugt von weniger als 100 ppm, besonders bevorzugt von weniger als 50 ppm eingesetzt wird.

4. Verfahren nach Ansprüch 1 bis 3, **dadurch gekennzeichnet, daß** die Wärmetauscherplatten in Drehrichtung des Rührers abgeknickt oder gebogen sind.

5. Verfahren nach einem Ansprüche 1 bis 4, **dadurch gekennzeichnet, daß** das Wärmetauschmittel aus den Wärmetauscherplatten in einer Schlaufenströmung über einen außerhalb des Reaktors angeordneten Wärmetauscher geführt wird.

6. Verfahren nach einem der Ansprüche 1 bis 5, **dadurch gekennzeichnet. daß** auf dem Reaktoraußenmantel ein Wärmetauscher angeordnet ist.

7. Verfahren nach Anspruch 6. **dadurch gekennzeichnet, daß** der auf dem Reaktoraußenmantel angeordnete Wärmetauscher in Form von Wärmetauscherhalbrohren ausgebildet ist.

8. Verfahren nach einem der Ansprüche 1 bis 7, **dadurch gekennzeichnet, daß** die Umsetzung bei einer Temperatur im Bereich von 90 bis 200°C und einem Druck im Bereich von 1 bis 50 bar durchgeführt wird.

9. Verfahren nach Anspruch 8, **dadurch gekennzeichnet, daß** die Umsetzung bei einer Temperatur im Bereich von 110 bis 140°C und einem Druck von 2 bis 10 bar durchgeführt wird.

10. Verfahren nach Ansprüchen 1 bis 9, **dadurch gekennzeichnet, daß** der Multimetallcyanidkomplex-Katalysator der allgemeinen Formel (I)
M¹ ₐ[M²(CN)_{b}L¹ _{c}]_{d} e(M¹ _{f}X_{g}) hL².iH₂O (I)
entspricht, in der
M¹ mindestens ein Element aus der Gruppe, bestehend aus Zn(II), Fe(II), Co(III), Ni(II), Mn(II), Co(II), Sn(II), Pb(II), Fe(III), Mo(IV), Mo(VI), Al(III), V(IV), V(V), Sr(II), W(IV), W(VI). Cu(II), Cd(II), Hg(II), Pd(II), Pt(II), V(III). Mg(II), Ca(II). Sr(II), Ba(II) und Cr(III) ist,
M² mindestens ein Element aus der Gruppe, bestehend aus Fe(II), Fe(III), Co(III), Cr(III), Mn(II), Mn(III), Ir(III), Rh(III), Ru(II), V(IV), V(V), Co(II) und Cr(II) ist.
L¹ mindestens ein Ligand aus der Gruppe, bestehend aus Cyanid, Carbonyl, Cyanat, Isocyanat, Nitril, Thiocyanat und Nitrosyl ist,
X ein Formiatanion, Acetatanion oder Propionatanion ist.
L² mindestens ein mit Wasser mischbarer Ligand aus der Gruppe, bestehend aus Alkoholen, Aldehyden, Ketonen, Ethem, Polyethern, Estern, Hamstoffderivaten, Amiden, Nitrilen und Sulfiden ist,
a, b , c, d, e, f, g, h, i ganze Zahlen sind, wobei
a, b, c und d so gewählt sind, daß die Elektroneutralitätsbedingung erfüllt ist und
f und g so gewählt sind. daß die Elektroneutralitätsbedingung erfüllt ist.
dessen Röntgendiffraktogramm Reflexe bei mindestens den d-Werten
6,10 Å ± 0,04 Å
5,17 Å ± 0,04 Å
4,27 Å ± 0,02 Å
3,78 Å ± 0,02 Å
3,56 Å ± 0.02 Å
3,004 Å ± 0.007 Å
2,590 Å ± 0,006 Å
2,354 Å ± 0,004 Å
2.263 Å ± 0,004 Å
aufweist, wenn X ein Formiatanion ist, dessen Röntgendiffraktorgramm Reflexe bei mindestens den d-Werten
5,20 Å ± 0,02 Å
4.80 Å ± 0.02 Å
3,75 Å ± 0,02 Å
3,60 Å ± 0,02 Å
3,46 Å ± 0,01 Å
2.824 Å ± 0,008 Å
2,769 Å ± 0,008 Å
2.608 Å ± 0,007 Å
2,398 Å ± 0,006 Å
aufweist, wenn X ein Acetatanion ist, und dessen Röntgendiffraktorgramm Reflexe bei mindestens den d-Werten
5,59 Å ± 0,05 Å
5,40 Å ± 0,04 Å
4,08 Å ± 0,02 Å
3,94 Å ± 0,02 Å
3,76 Å ± 0,02 Å
3,355 Å ± 0,008 Å
3,009 Å ± 0,007 Å
2,704 Å ± 0,006 Å
2,381 Å ± 0.004 Å
aufweist, wenn X ein Propionatanion ist. oder die ein monoklines Kristallsystem aufweisen, wenn X ein Acetatanion ist.

11. Verfahren nach einem der Ansprüche 1 bis 10, **dadurch gekennzeichnet, daß** der Multimetallcyanidkomplex-Katalysator weitgehend oder vollständig kristallin ist.

12. Verfahren nach Anspruch 11, dadurch gekenazeichnet, daß ein Multimetallcyanidkomplex-Katalysator vom Zink-Kobalt-Typ verwendet wird.

## Claims

1. A process for the preparation of polyetherpolyols by reacting diols or polyols with ethylene oxide, propylene oxide, butylene oxide or a mixture thereof in the presence of a multimetal cyanide complex catalyst, wherein the reaction is carried out in a vertical, highly cylindrical reactor having a central stirrer and having heat exchanger plates through which a heat-exchange medium flows and which are arranged essentially in the longitudinal direction of the reactor, at an angle α of from 0 to 70° in the direction of rotation of the stirrer relative to the reactor radius.

2. A process as claimed in claim 1, wherein the heat exchanger plates are arranged radially.

3. A process as claimed in claim 1 or 2, wherein the multimetal cyanide complex catalyst is used in a concentration of less than 250 ppm, preferably less than 100 ppm, particularly preferably less than 50 ppm, based on the mass of product to be produced.

4. A process as claimed in any of claims 1 to 3, wherein the heat exchanger plates are bent or curved in the direction of rotation of the stirrer.

5. A process as claimed in any of claims 1 to 4, wherein the heat-exchange medium is passed from the heat exchanger plates in a loop flow via a heat exchanger arranged outside the reactor.

6. A process as claimed in any of claims 1 to 5, wherein a heat exchanger is arranged on the outer jacket of the reactor.

7. A process as claimed in claim 6, wherein the heat exchanger arranged on the outer jacket of the reactor is in the form of heat exchanger half-tubes.

8. A process as claimed in any of claims 1 to 7, wherein the reaction is carried out at from 90 to 200°C and from 1 to 50 bar.

9. A process as claimed in claim 8, wherein the reaction is carried out at from 110 to 140°C and from 2 to 10 bar.

10. A process as claimed in any of claims 1 to 9, wherein the multimetal cyanide complex catalyst corresponds to the formula (I)
M¹ ₐ[M²(CN)_{b}L¹ _{c}]_{d}·e(M¹ _{f}X_{g}) · hL².iH₂O (I)
where M¹ is at least one element from the group consisting of Zn(II), Fe(II), Co(III), Ni(II), Mn(II), Co(II), Sn(II), Pb(II), Fe(III), Mo(IV), Mo(VI), Al(III), V(IV), V(V), Sr(II), W(IV), W(VI), Cu(II), Cd(II), Hg(II), Pd(II), Pt(II), V(III), Mg(II), Ca(II), Sr(II), Ba(II) and Cr(III),
M² is at least one element from the group consisting of Fe(II), Fe(III), Co(III), Cr(III), Mn(II), Mn(III), Ir(III), Rh(III), Ru(II), V(IV), V(V), Co(II) and Cr(II),
L¹ is at least one ligand from the group consisting of cyanide, carbonyl, cyanate, isocyanate, nitrile, thiocyanate and nitrosyl,
X is a formate anion, acetate anion or propionate anion,
L² is at least one water-miscible ligand from the group consisting of alcohols, aldehydes, ketones, ethers, polyethers, esters, urea derivatives, amides, nitriles and sulfides,
a, b, c, d, e, f, g, h and i are integers,
a, b, c and d being chosen so that the electroneutrality condition is fulfilled and
f and g being chosen so that the electroneutrality condition is fulfilled,
whose X-ray diffraction pattern has reflections at at least the d values
6.10 Å ± 0.004 Å
5.17 Å ± 0.04 Å
4.27 Å ± 0.02 Å
3.78 Å ± 0.02 Å
3.56 Å ± 0.02 Å
3.004 Å ± 0.007 Å
2.590 Å ± 0.006 Å
2.354 Å ± 0.004 Å
2.263 Å ± 0.004 Å
if X is a formate anion, whose X-ray diffraction pattern has reflections at at least the d values
5.20 Å ± 0.02 Å
4.80 Å ± 0.02 Å
3.75 Å ± 0.02 Å
3.60 Å ± 0.02 Å
3.46 Å ± 0.01 Å
2.824 Å ± 0.008 Å
2.769 Å ± 0.008 Å
2.608 Å ± 0.007 Å
2.398 Å ± 0.006 Å
if X is an acetate anion, and whose X-ray diffraction pattern has reflections at at least the d values
5.59 Å ± 0.05 Å
5.40 Å ± 0.04 Å
4.08 Å ± 0.02 Å
3.94 Å ± 0.02 Å
3.76 Å ± 0.02 Å
3.355 Å ± 0.008 Å
3.009 Å ± 0.007 Å
2.704 Å ± 0.006 Å
2.381 Å ± 0.004 Å
if X is a proprionate anion or which have a monoclinic crystal system if X is an acetate anion.

11. A process as claimed in any of claims 1 to 10, wherein the multimetal cyanide complex catalyst is substantially or completely crystalline.

12. A process as claimed in claim 11, wherein a multimetal cyanide complex catalyst of the zinc-cobalt type is used.

## Revendications

1. Procédé pour la préparation de polyétherpolyols par réaction de diols ou de polyols avec de l'oxyde d'éthylène, de l'oxyde de propylène, de l'oxyde de butylène ou des mélanges de ceux-ci en présence d'un catalyseur à complexe cyanure polymétallique, **caractérisé en ce que** la réaction est réalisée dans un réacteur vertical, cylindrique haut avec un agitateur central ainsi qu'avec des plaques échangeuses de chaleur, traversées par un agent caloporteur, qui sont disposées essentiellement dans le sens longitudinal du réacteur sous un angle α de 0 à 70° dans le sens de rotation de l'agitateur par rapport au rayon du réacteur.

2. Procédé selon la revendication 1, **caractérisé en ce que** les plaques échangeuses de chaleur sont disposées radialement.

3. Procédé selon la revendication 1 ou 2, **caractérisé en ce que** le catalyseur à complexe cyanure polymétallique est utilisé en une concentration, par rapport à la masse de produit à obtenir, de moins de 250 ppm, de préférence de moins de 100 ppm, de manière particulièrement préférée de moins de 50 ppm.

4. Procédé selon la revendication 1 à 3, **caractérisé en ce que** les plaques échangeuses de chaleur sont coudées ou pliées dans le sens de rotation de l'agitateur.

5. Procédé selon l'une quelconque des revendications 1 à 4, **caractérisé en ce que** l'agent caloporteur est guidé à la sortie des plaques échangeuses de chaleur dans un écoulement en boucle via un échangeur de chaleur disposé en dehors du réacteur.

6. Procédé selon l'une quelconque des revendications 1 à 5, **caractérisé en ce qu'**un échangeur de chaleur est disposé sur la paroi extérieure du réacteur.

7. Procédé selon la revendication 6, **caractérisé en ce que** l'échangeur de chaleur disposé sur la paroi extérieure du réacteur est réalisé sous forme d'un demi-tube échangeur de chaleur.

8. Procédé selon l'une quelconque des revendications 1 à 7, **caractérisé en ce que** la réaction est réalisée à une température dans la plage de 90 à 200°C et une pression dans la plage de 1 à 50 bars.

9. Procédé selon la revendication 8, **caractérisé en ce que** la réaction est réalisée à une température dans la plage de 110 à 140°C et une pression de 2 à 10 bars.

10. Procédé selon les revendications 1 à 9, **caractérisé en ce que** le catalyseur à complexe cyanure polymétallique correspond à la formule générale (1)
M¹ ₐ[M²(CN)_{b}L¹ _{c}]_{d}.e(M¹ _{f}X_{g}).hL². iH₂O (1)
dans laquelle
M¹ représente au moins un élément du groupe constitué par Zn(II), Fe(II), Co(III), Ni(II), Mn(II), Co(II), Sn(II), Pb(II), Fe(III), Mo(IV), Mo(VI), Al(III), V(IV), V(V), Sr(II), W(IV), W(VI), Cu(II), Cd(II), Hg(II), Pd(II), Pt(II), V(III), Mg(II), Ca(II), Sr(II), Ba(II) et Cr(III),
M² représente au moins un élément du groupe constitué par Fe(II), Fe(III), Co(III), Cr(III), Mn(II), Mn(III), Ir(III), Rh(III), Ru(II), V(IV), V(V), Co(II) et Cr(II),
L¹ représente au moins un ligand du groupe constitué par cyanure, carbonyle, cyanate, isocyanate, nitrile, thiocyanate et nitrosyle,
X représente un anion formiate, un anion acétate ou un anion propionate, L² représente au moins un ligand miscible avec l'eau du groupe constitué par les alcools, les aldéhydes, les cétones, les éthers, les polyéthers, les esters, les dérivés de l'urée, les amides, les nitriles et les sulfures,
a, b, c, d, e, f, g, h, i représentent des nombres entiers, où
a, b, c et d sont choisis de telle manière que la condition d'électroneutralité est remplie et
f et g sont choisis de telle manière que la condition d'électroneutralité est remplie,
dont le diffractogramme de rayons X présente des réflexions au moins aux valeurs d
6,10 Å ± 0,04 Å
5,17 Å ± 0,04 Å
4,27 Å ± 0,02 Å
3,78 Å ± 0,02 Å
3,56 Å ± 0,02 Å
3,004 Å ± 0,007 Å
2,590 Å ± 0,006 Å
2,354 Å ± 0,004 Å
2,263 Å ± 0,004 Å
lorsque X est un anion formiate, dont le diffractogramme de rayons X présente des réflexions au moins aux valeurs d
5,20 Å ± 0,02 Å
4,80 Å ± 0,02 Å
3,75 Å ± 0,02 Å
3,60 Å ± 0,02 Å
3,46 Å ± 0,01 Å
2,824 Å ± 0,008 Å
2,769 Å ± 0,008 Å
2,608 Å ± 0,007 Å
2,398 Å ± 0,006 Å
lorsque X est un anion acétate et dont le diffractogramme de rayons X présente des réflexions au moins aux valeurs d
5,59 Å ± 0,05 Å
5,40 Å ± 0,04 Å
4,08 Å ± 0,02 Å
3,94 Å ± 0,02 Å
3,76 Å ± 0,02 Å
3,355 Å ± 0,008 Å
3,009 Å ± 0,007 Å
2,704 Å ± 0,006 Å
2,381 Å ± 0,004 Å
lorsque X est un anion propionate ou qui présente un système cristallin monoclinique lorsque X est un anion acétate.

11. Procédé selon l'une quelconque des revendications 1 à 10, **caractérisé en ce que** le catalyseur à complexe cyanure polymétallique est largement ou complètement cristallin.

12. Procédé selon la revendication 11, **caractérisé en ce qu'**on utilise un catalyseur à complexe cyanure polymétallique de type zinc-cobalt.
